# EUROPÄISCHE PATENTANMELDUNG

(11) **EP 2 940 478 A1**
(43) Veröffentlichungstag der Anmeldung: **04.11.2015**
(21) Anmeldenummer: 14171065.7
(22) Anmeldetag: 04.06.2014
(51) Int. Cl.: G01P 3/481, G01P 3/488, H02K 11/00, H02K 29/12, H02K 23/66

(54) **Drehzahlerkennung eines elektrischen Motors mittels induktiver Messtechnik**

(30) Priorität: 29.04.2014 EP 14166304
(71) Anmelder: HILTI Aktiengesellschaft, 9494 Schaan (LI)
(72) Erfinder: Bahr, Dominik, 86971 Peiting (DE); Schubert, Wolfgang, 86899 Landsberg (DE); Meiendres, Germar, 86899 Landsberg (DE); Beckert, Benedikt, 86159 Augsburg (DE)
(74) Vertreter: Hilti Aktiengesellschaft Corporate Intellectual Property

(57) **Zusammenfassung**

Vorrichtung zum Erfassen der Drehzahl eines Elektromotors, insbesondere einer Gleichstrommaschine, enthaltend ein Stator mit wenigstens zwei Permanentmagneten und einem Gehäuse; ein Rotor mit wenigstens zwei Polelementen, wobei der Rotor innerhalb des Gehäuses positionierbar ist; wenigstens ein Sensor zum Detektieren wenigstens eines Polelements des Rotors; und eine Steuerungseinrichtung zum Bestimmen der Drehzahl wenigstens eines Bauteils des Rotors.
Der Sensor kann als Spule ausgebildet sein und wird durch eine Öffnung im inneren des Statorgehäuses positioniert, sodass er dem Rotor mit geringem Abstand gegenüberliegt. Die Spule kann als auf einer Leiterplatte aufgedruckte Spule ausgebildet sein.

## Beschreibung

Die vorliegende Erfindung bezieht sich auf ein Vorrichtung zum Erfassen der Drehzahl eines Elektromotors enthaltend ein Stator mit wenigstens zwei Permanentmagneten und einem Gehäuse; ein Rotor mit wenigstens zwei Polelementen, wobei der Rotor innerhalb des Gehäuses positionierbar ist; wenigstens ein Sensor zum Detektieren wenigstens eines Bauteils des Rotors, insbesondere eines Polelements; und eine Steuerungseinrichtung zum Bestimmen der Drehzahl wenigstens eines Bauteils des Rotors.

Eine möglichst exakte Bestimmung der Drehzahl eines Elektromotors ist insbesondere bei der Verwendung des Elektromotors als Antrieb für eine elektrische Werkzeugmaschine äußerst wichtig. Bei der Werkzeugmaschine kann es sich beispielsweise um eine Bohrmaschine, einen Bohrhammer, eine Schleifmaschine, eine Säge oder ähnliches handeln. Ein Elektromotor besteht im Wesentlichen aus einen Stator (auch Ständer genannt) und einem Rotor (auch Anker genannt).

Zum Bestimmen der Drehzahl eines Elektromotors sind gemäß dem Stand der Technik verschiedene Vorrichtung bekannt und in Verwendung.

Beispielsweise offenbart die deutsche Patentanmeldung DE 198 51 760 A1 eine Vorrichtung zum Erfassen der Drehzahl eines Elektromotors.

Ein weit verbreitetes Problem bei der Bestimmung der Drehzahl eines Elektromotors gemäß dem Stand der Technik besteht darin, dass neben den elektrischen und elektronischen Komponenten, die für die Bestimmung der Drehzahl notwendig sind, zusätzlich noch weitere mechanische Aufbauten an dem jeweiligen Elektromotoren vorgesehen sind. Allein durch diese mechanischen Aufbauten, wie z.B. magnetisches Material in Form eines Magnetrings oder in Kunststoff eingebettete Einzelmagnete, entstehen zusätzliche Kosten sowie verlängerte Prozesszeiten bei der Entwicklung bzw. Produktion der Elektromotoren und Drehzahlmessvorrichtungen. Darüber hinaus beanspruchen diese mechanischen Aufbauten zusätzlichen Bauraum, wodurch der Elektromotor insgesamt größer, schwerer und ineffizienter wird.

Aufgabe der vorliegenden Erfindung ist es dieses vorstehend beschriebene Problem zu lösen und insbesondere eine Vorrichtung zum Erfassen der Drehzahl eines Elektromotors zur Verfügung zu stellen, mit der die Messung der Drehzahl eines Elektromotors besser und insgesamt effizienter durchgeführt werden kann. Die Vorrichtung zum Erfassen der Drehzahl eines Elektromotors soll hierzu kompakter in seinen Ausmaßen und auch kostengünstiger in der Herstellung sein.

Diese Aufgabe wird erfindungsgemäss durch den Gegenstand des unabhängigen Anspruchs 1 gelöst.

Hierzu wird eine Vorrichtung zum Erfassen der Drehzahl eines Elektromotors vorgestellt, enthaltend ein Stator mit wenigstens zwei Permanentmagneten und einem Gehäuse; ein Rotor mit wenigstens zwei Polelementen, wobei der Rotor innerhalb des Gehäuses positionierbar ist; wenigstens ein Sensor zum Detektieren eines Polelements des Rotors; und eine Steuerungseinrichtung zum Bestimmen der Drehzahl des Rotors.

Erfindungsgemäss ist dabei vorgesehen, dass der wenigstens eine Sensor durch eine Öffnung in dem Inneren des Gehäuses positionierbar ist. Durch die vorteilhafte Positionierung des Sensors im Inneren des Gehäuses findet eine direkte Drehzahlmessung in unmittelbarer Nähe des sich drehenden Rotors statt. Die Bestimmung der Drehzahl des Elektromotors bzw. des Rotors relativ zum Stator kann damit exakt und fehlerfrei vorgenommen werden. Darüber hinaus gewährleistet eine derartige Anordnung des Sensors im Inneren des Gehäuses eine sehr platzsparende und kompakte Bauweise des Elektromotors sowie der Drehzahlmesseinrichtung.

Gemäß einer vorteilhaften Ausgestaltungsform der vorliegenden Erfindung kann vorgesehen sein, dass der Sensor in Form einer Induktionsspule ausgestaltet ist und das Detektieren eines Polelements durch die Änderung wenigstens einer elektrischen Größe der Induktionsspule erfolgt. Durch die Verwendung einer Induktionsspule steht eine zuverlässige und relativ kostengünstige Sensortechnologie zur Verfügung, die es ermöglicht auf einfache Art und Weise die Rotation und damit die Drehfrequenz des Rotors zu bestimmen.

Um die Rotation und damit die Drehfrequenz bei einem Rotor, dessen Komponenten und insbesondere Polelemente aus nicht-magnetischem Material hergestellt sind, exakt bestimmen zu können, ist es vorteilhaft, dass die wenigstens eine elektrische Größe die Induktivität der Induktionsspule ist.

Entsprechend einer weiteren vorteilhaften Ausgestaltungsform der vorliegenden Erfindung kann des Weiteren vorgesehen sein, dass die Induktionsspule in Form einer aufgedruckten Spule auf einer Leiterplatte ausgestaltet ist. Die Induktionsspule ist damit als sogenannte gedruckte Schaltung verwirklicht. Hierdurch kann eine besonders flache und damit platzsparende Bauweise für den Elektromotor sowie für die Drehzahlmesseinrichtung realisiert werden.

Zur Sicherstellung einer möglichst exakten Bestimmung der Drehzahl des Rotors bzw. des Elektromotors kann es vorteilhaft sein, dass der maximale Abstand zwischen der als aufgedruckter Spule ausgestalteten Induktionsspule und dem Polelement im Wesentlichen der Hälfte des Durchmessers der aufgedruckten Spule auf der Leiterplatte entspricht.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine Vorderansicht auf eine erfindungsgemäße Vorrichtung zum Detektieren der Drehzahl eines Rotors gemäß einer ersten Ausführungsform zusammen mit einem Stator, einem Rotor, einem Sensor und einer Steuerungseinrichtung;
- Fig. 2: eine perspektivische Ansicht auf die Vorrichtung zum Detektieren der Drehzahl eines Rotors gemäß der ersten Ausführungsform zusammen mit einem Stator, einem Sensor und einer Steuerungseinrichtung;
- Fig. 3: eine perspektivische Ansicht auf einen Sensor zur Verwendung in einer zweiten Ausführungsform der Vorrichtung zum Detektieren der Drehzahl eines Rotors;
- Fig. 4: eine Vorderansicht auf die Vorrichtung zum Detektieren der Drehzahl eines Rotors gemäß der zweiten Ausführungsform zusammen mit einem Stator, einem Rotor, einem Sensor und einer Steuerungseinrichtung; und
- Fig. 5: eine Vorderansicht auf die Vorrichtung zum Detektieren der Drehzahl eines Rotors gemäß der dritten Ausführungsform zusammen mit einem Stator, einem Rotor, einem Sensor und einer Steuerungseinrichtung.

### Ausführungsbeispiel:

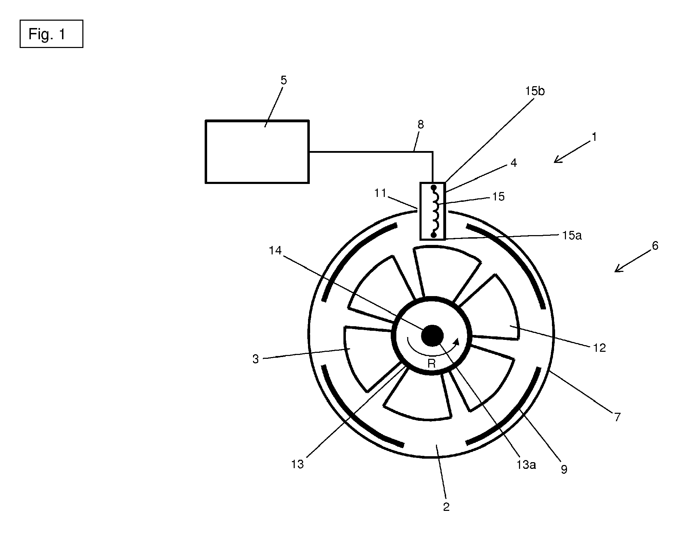

Fig. 1 zeigt eine erste Ausführungsform einer erfindungsgemäßen Vorrichtung 1 zum Erfassen der Drehzahl eines Elektromotors 6.

Die Vorrichtung 1 enthält dabei im Wesentlichen einen Stator 2, einen Rotor 3, einen Sensor 4 und eine Steuerungseinrichtung 5. Der Stator 2 und der Rotor 3 bilden dabei die wesentlichen Bestandteile eines Elektromotors 6. Bei dem Elektromotor 6, der in den Fig. 1 bis 4 schematisch dargestellt ist, handelt es sich um einen Gleichstrommotor. Es ist jedoch auch möglich nahezu jede andere Art von Elektromotoren (wie z.B. Universalmotoren) zu verwenden.

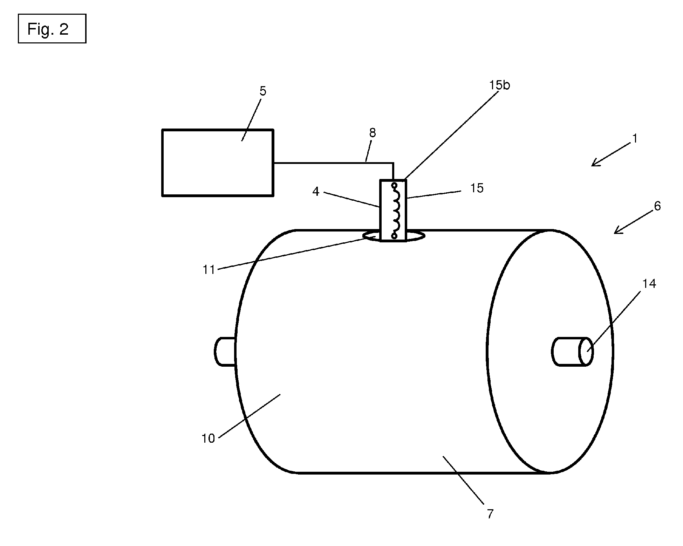

Der Stator 2 ist in Form eines länglichen Zylinders gestaltet und weist ein entsprechendes zylindrisches Gehäuse 7 auf. Im Inneren des Gehäuses 7 sind vier identische Permanentmagnete 9 positioniert. Die vier Permanentmagnete 9 sind in gleichmäßigen Abständen zueinander an der Innenseite des Statorgehäuses 7 positioniert. Des Weiteren enthält das Statorgehäuse 7, wie beispielsweise in Fig. 2 gezeigt, an der Mantelfläche 10 eine Durchgangsöffnung 11.

Der Rotor 3 enthält sechs identische Polelemente 12 und einen zylindrischen Rotorkern 13. Jedes Polelement 12 enthält ein erstes Ende 12a und ein zweites Ende 12b. Die sechs Polelemente 12 sind in gleichmäßigen Abständen zueinander um den Rotorkern 13 positioniert. Das erste Ende 12a eines jeden Polelements 12 ist dabei an dem Rotorkern 13 befestigt. Das zweite Ende 12b eines jeden Polelements 12 erstreckt sich radial von dem Rotorkern 13 in Richtung Gehäuseinnenwand. Gemäß der spezifischen Ausführungsform des Rotors 3 kann jedes der einzelnen Polelemente 12 eine (nicht dargestellte) Spulenwicklung aufweisen. Der Rotorkern 13 weist eine zentrale Durchgangsöffnung 13a auf. In der Durchgangsöffnung 13a ist eine Rotorwelle 14 drehfest angeordnet. Die Rotorwelle 14 dient zur Übertragung des in dem Elektromotor 6 produzierten Drehmoments auf weitere Bauteile, wie z.B. auf ein (nicht gezeigtes) Getriebe.

Der Rotor 3 ist drehbar gelagert im Inneren des Gehäuses 7 des Stators 2 positioniert. Der Rotor 3 und auch die fest mit dem Rotor 3 verbundene Rotorwelle 14 kann relativ zu dem Stator 2 bzw. zu dem Statorgehäuse 7 in Drehrichtung R gedreht werden.

Wie in Fig. 1 und 2 dargestellt, ist der Sensor 4 entsprechend der ersten Ausführungsform in Form einer länglichen, spiralförmigen Induktionsspule 15 gestaltet und enthält ein erstes Ende 15a und ein zweites Ende 15b. Die spiralförmige Induktionsspule 15 weist dabei keinen Spulenkern auf, wodurch es sich um eine sogenannte Luftspule handelt. Gemäß einer weiteren nicht gezeigten Ausführungsform kann die Spule 15 jedoch einen Spulenkern enthalten. Der Spulenkern kann als Ferritkern oder in Form eines anderen geeigneten Kerns gestaltet sein. Das erste Ende 15a der Induktionsspule 15 ragt durch die Durchgangsöffnung 11 in das Innere des Statorgehäuses 7. An dem zweiten Ende 15a der Induktionsspule 15 ist eine Verbindungsleitung 8 befestigt, die den als Induktionsspule 15 ausgestalteten Sensor 4 mit der Steuerungseinrichtung 5 verbindet. Die Steuerungseinrichtung 5 dient im Wesentlichen dazu die von dem Sensor 4 aufgenommenen Informationen und Daten in die momentane Drehgeschwindigkeit des Rotors 3 umzuwandeln. Der als Induktionsspule 15 ausgestaltete Sensor 4 kann in jeder möglichen Ausrichtung zu dem Rotor 3 bzw. zu dem Statorgehäuse 7 angeordnet sein. Die Ausrichtung erfolgt dabei in Erstreckung der Wicklung der Spule. Somit kann sich der als Induktionsspule 15 ausgestaltete Sensor 4 radial zu dem Rotor 3 bzw. zu einem Polelement 12 erstrecken. Alternativ kann sich der als Induktionsspule 15 ausgestaltete Sensor 4 axial zu der Rotorwelle 14 erstrecken. Weiterhin ist es auch möglich, dass sich der als Induktionsspule 15 ausgestaltete Sensor 4 quer oder in einem Winkel zu der Rotorwelle 14 erstreckt.

Zum Erfassen der Drehgeschwindigkeit des Rotors 3 ist das erste Ende des als Induktionsspule 15 ausgestalteten Sensors 4 so in das Innere des Statorgehäuses 7 positioniert, dass das erste Ende 15a der Induktionsspule 15 in kurzer Distanz zu dem zweiten Ende 12b eines jeden Polelements 12 beabstandet ist. Die Masse eines jeden Polelements 12 beeinflusst die Induktivität der Induktionsspule 15, sodass die Induktivität der Induktionsspule 15 steigt, wenn sich ein Polelement 12 in der unmittelbaren Nähe des als Induktionsspule 15 ausgestalteten Sensors 4 befindet. Die Distanz zwischen dem ersten Ende 15a der Induktionsspule 15 und dem zweiten Ende 12b eines jeden Polelements 12 ist daher so gewählt, dass eine ausreichende Beeinflussung der Induktivität der Induktionsspule 15 durch die Masse des Polelements 12 stattfinden kann. In entsprechender Weise verringert sich die Induktivität der Induktionsspule 15, wenn sich die Masse eines jeden Polelements 12 von dem als Induktionsspule 15 ausgestalteten Sensors 4 entfernt. Da sich der Rotor 3 in dem Stator 2 bzw. relativ zu dem Stator 2 dreht und der als Induktionsspule 15 ausgestaltete Sensor 4 drehfest mit dem Stator 2 bzw. Statorgehäuse 7 verbunden ist, nähert sich entsprechend der jeweiligen Drehgeschwindigkeit des Rotors 3 ein Polelement 12 an den Sensor 4 heran und entfernt sich anschließend wieder von diesem. Hierbei steigt die Induktivität der Induktionsspule 15 und fällt wieder ab, wenn sich ein Polelement 12 an dem Sensor 4 vorbeibewegt. Das Steigen und Fallen der Induktivität kann daher als Anwesenheit eines Polelements 12 in unmittelbarer Nähe des Sensors 4 interpretiert werden.

Diese Auswirkung auf die Induktivität der Induktionsspule 15 kann von der Steuerungseinrichtung 5 gemessen und in die momentane Drehgeschwindigkeit des Rotors 3 umgewandelt werden. Die Logik der Steuerungseinrichtung 5 kann hierzu die zyklisch auftretenden Steigerungen sowie die Abfälle der Induktivität erfassen und anhand der Anzahl der Polelemente 12 des Rotors 3 die Drehgeschwindigkeit des Elektromotors 6 erfassen.

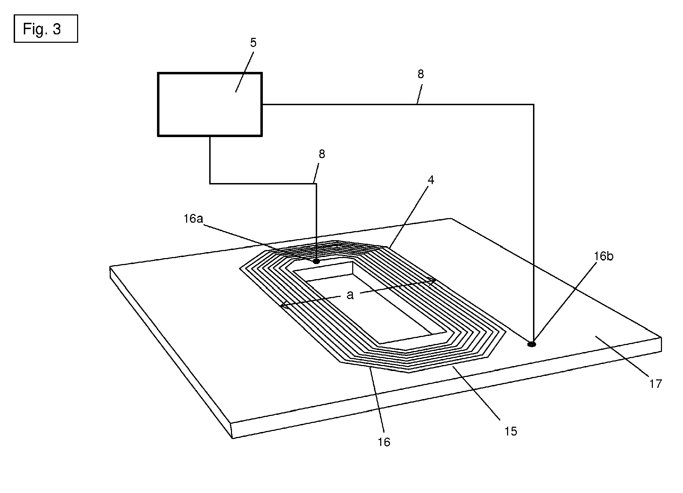

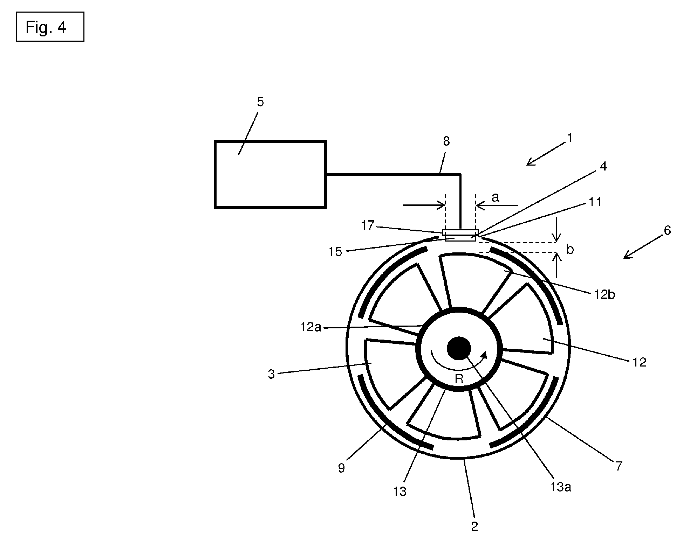

Wie in Fig. 3 dargestellt, kann der als Induktionsspule 15 ausgestaltete Sensor 4 gemäß einer zweiten Ausführungsform der Vorrichtung 1 zum Erfassen der Drehzahl in Form einer spiralförmig angelegten Leiterbahn 16 auf einer Leiterplatte 17 gestaltet sein. Die Induktionsspule 15 ist somit als auf der Leiterplatte 17 angelegte Leiterbahn 16 bzw. aufgedruckte Spule 16 auf einer Leiterplatte 17 ausgestaltet. Diese als aufgedruckte Spule 16 ausgestaltete Induktionsspule 15 enthält ein erstes Ende 16a und ein zweites Ende 16b. Mit den ersten Ende 16a und dem zweiten Ende 16b ist die aufgedruckte Spule 16 mit der Steuereinrichtung 5 verbunden. Des Weiteren beträgt die Breite bzw. der Durchmesser der aufgedruckten Spule 16 den Wert a. Gemäß der zweiten Ausführungsform enthält die aufgedruckte Spule 16 keinen Spulenkern. Wie in Fig. 4 gezeigt, ist die als aufgedruckte Spule 16 ausgestaltete Induktionsspule 15 im Wesentlichen in der Durchgangsöffnung 11 des Statorgehäuses 7 positioniert.

Alternativ kann die Induktionsspule 15 auch als SMD (surface-mounted device)-Spule, die auf eine Leiterplatte gelötet ist, ausgestaltet sein.

Entsprechend weiterer nicht gezeigter Ausführungsformen kann jedoch auch vorgesehen sein, dass die Induktionsspule 15 einen Spulenkern aufweist. Darüber hinaus kann es gemäß weiteren Ausführungsformen auch möglich sein, dass die Induktionsspule 15 durch die Durchgangsöffnung 11 des Statorgehäuses 7 hindurch in das Innere des Statorgehäuses 7 ragt und somit in dem Inneren des Statorgehäuses 7 positioniert ist.

Die Wirk- und Funktionsweise dieser als aufgedruckte Spule 16 ausgestalteten Induktionsspule 15 gemäß der zweiten Ausführungsform (Fig. 3) ist im Wesentlichen identisch zu der als spiralförmig ausgestalteten Induktionsspule 15 gemäß der ersten Ausführungsform (Fig. 1 und 2). Die Induktivität der aufgedruckte Spule 16 ausgestalteten Induktionsspule 15 steigt ebenfalls, wenn sich die Masse eines Polelements 12 nähert und verringert sich entsprechend, wenn sich die Masse des Polelements 12 wieder entfernt. Die mit der Induktionsspule 15 verbundene Steuerungseinrichtung 5 wertet diese Steigerungen und Abfälle der Induktivität in die momentane Drehgeschwindigkeit des Rotors 3 um. Die Drehgeschwindigkeit des Rotors 3 wird über eine nicht in den Figuren gezeigte Drehgeschwindigkeitsanzeige dem Anwender angezeigt. Damit eine möglichst genaue Bestimmung der Drehgeschwindigkeit des Rotors 3 erreicht werden kann, ist zu beachten, dass bei der Verwendung einer als aufgedruckte Spule 16 ausgestalteten Induktionsspule 15 der Abstand zwischen der Induktionsspule 15 und dem Polelement 12 nicht einen bestimmten Wert übersteigt. Der Abstand b zwischen der als aufgedruckter Spule 16 ausgestalteten Induktionsspule 15 und dem zweiten Ende 12b eines jeden Polelements 12 sollte daher maximal der Hälfte des Durchmessers bzw. der Hälfte der Breite a/2 der aufgedruckten Spule 16 auf der Leiterplatte 17 entsprechen (vgl. Fig. 4).

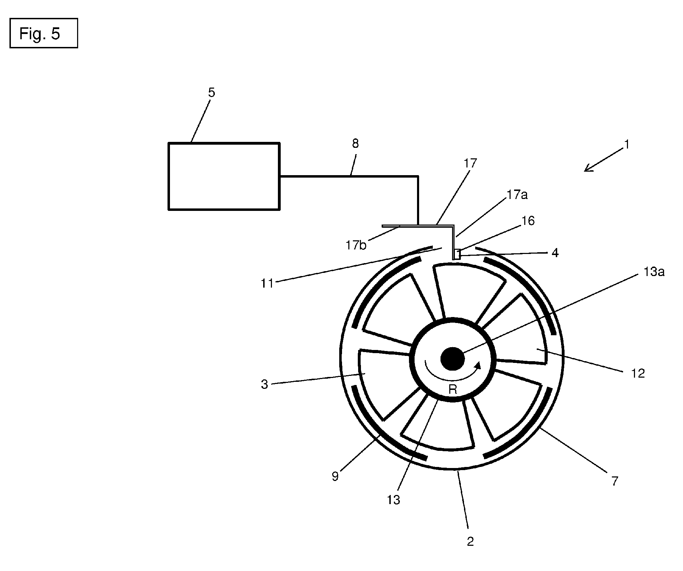

Die in Fig. 5 gezeigte dritte Ausführungsform der Vorrichtung 1 zum Erfassen der Drehzahl eines Elektromotors 6 ist im Wesentlichen identisch mit der zweiten Ausführungsform der Vorrichtung 1 zum Erfassen der Drehzahl eines Elektromotors 6 (vgl. Fig. 4). Im Unterschied zu der zweiten Ausführungsform enthält die Leiterplatte 17 auf der sich die Induktionsspule 15 als aufgedruckte Spule 16 befindet gemäß der dritten Ausführungsform einen ersten Abschnitt 17a und einen zweiten Abschnitt 17b. Der erste Abschnitt 17a ist im Wesentlichen in einem rechten Winkel zu dem zweiten Abschnitt 17b angeordnet. Es ist jedoch auch möglich, dass der erste Abschnitt 17a in einem anderen Winkel (d.h. größer oder kleiner als 90°) zu dem zweiten Abschnitt 17b angeordnet ist. An dem ersten Abschnitt 17a ist die als aufgedruckte Spule 16 ausgestaltete Induktionsspule 15 angeordnet. Der als Induktionsspule 15 ausgestaltete Sensor 4 ist durch die Durchgangsöffnung 11 in dem Inneren des Statorgehäuses 7 positioniert.

## Patentansprüche

1. Vorrichtung (1) zum Erfassen der Drehzahl eines Elektromotors (6) enthaltend
- ein Stator (2) mit wenigstens zwei Permanentmagneten (9) und einem Gehäuse (7);
- ein Rotor (3) mit wenigstens zwei Polelementen (12), wobei der Rotor (3) innerhalb des Gehäuses (7) positionierbar ist;
- wenigstens ein Sensor (4) zum Detektieren eines Polelements (12) des Rotors (3); und
- eine Steuerungseinrichtung (5) zum Bestimmen der Drehzahl des Rotors (3)
**dadurch gekennzeichnet, dass** der wenigstens eine Sensor (4) durch eine Öffnung (11) in dem Inneren des Gehäuses (7) positionierbar ist.

2. Vorrichtung (1) nach Anspruch 1,
**dadurch gekennzeichnet, dass** der Sensor (4) in Form einer Induktionsspule (15) ausgestaltet ist und das Detektieren eines Polelements (12) durch die Änderung wenigstens einer elektrischen Größe der Induktionsspule (15) erfolgt.

3. Vorrichtung (1) nach Anspruch 2,
**dadurch gekennzeichnet, dass** die wenigstens eine elektrische Größe die Induktivität der Induktionsspule (15) ist.

4. Vorrichtung (1) nach wenigstens einem der Ansprüche 1 bis 3,
**dadurch gekennzeichnet, dass** die Induktionsspule (15) in Form einer aufgedruckten Spule (16) auf einer Leiterplatte (17) ausgestaltet ist.

5. Vorrichtung (1) nach Anspruch 4,
**dadurch gekennzeichnet, dass** der maximale Abstand (b) zwischen der als aufgedruckter Spule (16) ausgestalteten Induktionsspule (15) und dem Polelement (12) im Wesentlichen der Hälfte des Durchmessers (a/2) der aufgedruckten Spule (16) auf der Leiterplatte (17) entspricht.
